# EUROPÄISCHE PATENTSCHRIFT

(11) **EP 3 974 769 B1**
(45) Veröffentlichungstag und Bekanntmachung des Hinweises auf die Patenterteilung: **28.02.2024**
(21) Anmeldenummer: 21196548.8
(22) Anmeldetag: 14.09.2021
(51) Int. Cl.: G01B 11/24, G01B 21/04, G01B 5/012

(54) **MESSSYSTEM UND VERFAHREN ZUM BETREIBEN EINES MESSSYSTEMS**
MEASURING SYSTEM AND METHOD FOR OPERATING SAME
SYSTÈME DE MESURE ET PROCÉDÉ DE FONCTIONNEMENT D'UN SYSTÈME DE MESURE

(30) Priorität: 23.09.2020 DE 102020124805
(43) Veröffentlichungstag der Anmeldung: 30.03.2022
(73) Patentinhaber: JENOPTIK Industrial Metrology Germany GmbH, 78052 Villingen-Schwenningen (DE)
(72) Erfinder: Tuch, Carsten, 07407 Rudolstadt (DE); Schubert, Michael, 07745 Jena (DE)
(74) Vertreter: Waldauf, Alexander

(56) Entgegenhaltungen:
- WO-A1-2019/207437
- DE-B3-102012 104 008
- IT-A1-201800 009 215
- US-A- 5 373 222

## Beschreibung

Der vorliegende Ansatz bezieht sich auf ein Messsystem und ein Verfahren zum Betreiben eines Messsystems.

Die DE 10 2015 226 385 A1 beschreibt ein Verfahren zur Ermittlung eines Messfehlers und zum Vermessen eines Werkstücks mit einem Koordinatenmessgerät. Die US 5 373 222 A offenbart eine Messeinrichtung zum Messen von Verschiebungen, die nicht parallel zur Verfahrlinie eines Verschiebungstasters verlaufen. Die Dokumente IT 201800009215 A1 und WO 2019/207437 A1 offenbaren je ein optisches Messgerät zur Messung eines Objekts mit einer hauptsächlich länglichen Ausdehnung.

### Offenbarung der Erfindung

Vor diesem Hintergrund werden mit dem vorliegenden Ansatz ein Messsystem und ein Verfahren zum Betreiben eines Messsystems gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen darin, dass ein Messsystem geschaffen wird, das eine beispielsweise temperaturbedingte Änderung eines Winkels einer Sensormessachse eines Sensors zum Erfassen eines Werkstücks gegenüber einem Maschinenkoordinatensystem des Messsystems erkennt.

Ein Messsystem weist ein Maschinenbett, eine Sensoreinrichtung mit einem Tastsensor zur Erfassung von Punkten in einem Maschinenkoordinatensystem und ein Referenzmodul auf. In dem Maschinenbett ist ein Werkstück entlang einer Aufnahmeachse aufnehmbar. Dazu kann das Maschinenbett Einrichtungen zur Aufnahme eines Werkstücks aufweisen. Die Sensoreinrichtung mit dem Tastsensor ist in mehreren Richtungen relativ zum Maschinenbett verfahrbar und beispielsweise zum Vermessen einer Kontur des in dem Maschinenbett aufgenommenen Werkstücks ausgebildet. Das Referenzmodul ist an einem Fixpunkt des Messsystems befestigt und weist zumindest einen ersten Messpunkt und einen zweiten Messpunkt auf. Der Tastsensor ist entlang zumindest einer Sensormessachse verfahrbar und dazu ausgebildet, um den ersten Messpunkt und den zweiten Messpunkt zu erfassen, um eine

Ausrichtung der Sensormessachse gegenüber dem Maschinenkoordinatensystem zu erkennen.

Die Sensoreinrichtung und das Referenzmodul können als Teil einer Vorrichtung und zur ständigen Überprüfung und Justierung der Ausrichtung von Sensormessachsen in einem Messsystem zur Vermessung von Werkstücken verstanden werden.

Das Maschinenbett kann einen Spindelstock mit einer Zentrierspitze und einen koaxial zu dem Spindelstock angeordneten Reitstock mit einer Zentrierspitze aufweisen. Zwischen den zwei koaxialen Zentrierspitzen kann beispielsweise ein wellenförmiges Werkstück aufgenommen oder eingespannt werden. Beispielsweise kann das Werkstück zwischen den Zentrierspitzen um die Aufnahmeachse drehbar aufnehmbar sein. Das Referenzmodul ist an einem Fixpunkt befestigt, der an dem Maschinenbett, beispielsweise an dem Spindelstock angeordnet ist. Hierbei ist das Referenzmodul unbeweglich an dem Fixpunkt fixiert. Das Referenzmodul kann außerhalb eines Vermessungsbereichs zum Vermessen des Werkstücks befestigt oder befestigbar sein. Beispielsweise kann das Referenzmodul eine ebene Fläche aufweisen und unter oder über dem Vermessungsbereich befestigt oder befestigbar sein. Ein solches Messsystem ermöglicht vorteilhafterweise durch Erfassen der Messpunkte auf dem Referenzmodul eine Überprüfung einer Ausrichtung einer oder mehrerer Sensormessachsen gegenüber dem Maschinenkoordinatensystem. So können Messfehler aufgrund von beispielsweise temperaturbedingten Winkeländerungen der Achsen zueinander reduziert oder sogar vermieden werden. Ein Messpunkt kann eine definierte Position auf einer Oberfläche des Referenzmoduls oder eine besonders ausgeformte Stelle an dem Referenzmodul repräsentieren.

Das Referenzmodul kann an dem Fixpunkt befestigt oder befestigbar sein, der an einem einer Zentrierspitze eines Spindelstocks des Maschinenbetts abgewandten Ende des Spindelstocks angeordnet ist. So kann das Referenzmodul außerhalb des Vermessungsbereichs angeordnet sein, wo im Betrieb des Messsystems möglichst wenige Umgebungseinflüsse wie erhöhte Temperaturen auf das Referenzmodul wirken und eine Verformung/Ausdehnung des Referenzmoduls unwahrscheinlich ist.

Gemäß der Erfindung ist das Messsystem ausgebildet, um in einem Einmessverfahren eine erste Einmessposition des ersten Messpunkts einzumessen und als eine erste Referenzposition bereitzustellen und eine zweite Einmessposition des zweiten Messpunkts einzumessen und als eine zweite Referenzposition bereitzustellen. Ein solches Einmessverfahren kann von dem Messsystem einmalig oder in einem beispielsweise längeren definierten Zeitabstand durchgeführt werden, um die Referenzpositionen zu generieren, welche Sollpositionen in einem ideal orthogonal ausgerichteten Koordinatensystem des Messsystems repräsentieren können. Die Referenzpositionen können für einen Abgleich mit im darauffolgenden Betrieb des Messsystem erfassten aktuellen Positionen des ersten Messpunkts und zweiten Messpunkts bereitgestellt werden, beispielsweise gespeichert werden, um diese aktuellen Positionen überprüfen zu können.

Das Messsystem ist ausgebildet, um eine erste aktuelle Position des ersten Messpunkts zu messen und eine zweite aktuelle Position des zweiten Messpunkts zu messen, wobei das Messsystem eine Auswerteeinrichtung aufweist, die ausgebildet ist, um die aktuelle erste Position mit der ersten Referenzposition und die zweite aktuelle Position mit der zweiten Referenzposition zu vergleichen und eine Fehleinstellung der Sensormessachse gegenüber der Aufnahmeachse zu erkennen, wenn die erste aktuelle Position von der ersten Referenzposition und/oder die zweite aktuelle Position von der zweiten Referenzposition abweicht und/oder eine korrekte Einstellung der Sensormessachse gegenüber dem Maschinenkoordinatensystem zu erkennen, wenn die erste aktuelle Position der ersten Referenzposition und/oder die zweite aktuelle Position der zweiten Referenzposition entspricht. So kann eine Winkelabweichung der Sensormessachse schnell und einfach erkannt werden. Die Auswerteeinrichtung kann in einem Steuergerät des Messsystems angeordnet sein und ausgebildet sein, um die aktuellen Positionen und/oder Referenzpositionen von dem Tastsensor zu empfangen.

Gemäß der Erfindung weist das Messsystem eine Korrektureinrichtung auf, die ausgebildet ist, um unter Verwendung der aktuellen ersten Position und der aktuellen zweiten Position die Sensormessachse oder eine Vermessungsformel zum Vermessen des Werkstücks zu korrigieren, wenn die Fehleinstellung erkannt wird. So kann die Sensormessachse beispielsweise derart korrigiert werden, dass sie wieder orthogonal zu einer Koordinatenachse des Maschinenkoordinatensystems angeordnet ist, um Messfehler bei der Vermessung zu vermeiden. Oder es kann eine durch die Fehleinstellung bewirkte veränderte Sensormessachse in der Vermessungsformel derart berücksichtigt werden, dass Messfehler aufgrund der veränderten Sensormessachse ausgeglichen/korrigiert werden.

Das Referenzmodul kann zumindest eine plane Referenzfläche aufweisen, auf der der erste Messpunkt und der zweite Messpunkt angeordnet sind. So kann das Tastsensor zum Erfassen der Messpunkte schnell und einfach an der Referenzfläche entlang geführt werden. Das Referenzmodul kann insgesamt quaderförmig ausgeformt sein.

Es ist weiterhin von Vorteil, wenn das Referenzmodul eine Messspur aufweist, auf der zumindest der erste Messpunkt und der zweite Messpunkt angeordnet sind. So kann beim Erfassen der Messpunkte eine Abweichung von der Messspur schnell und einfach erkannt werden. Das Referenzmodul kann ferner zumindest einen zusätzlichen Messpunkt oder eine beliebige Anzahl zusätzlicher Messpunkte aufweisen. Der zusätzliche Messpunkt oder die zusätzlichen Messpunkte können auf der Messspur angeordnet sein. Je mehr Messpunkte das Referenzmodul aufweist, desto genauer ist eine Achsenabweichung der Sensormessachse unter Verwendung von zusätzlichen aktuellen Positionen der zusätzlichen Messpunkte und diesen je zugeordneten zusätzlichen Referenzpositionen detektierbar.

Die plane Referenzfläche kann schräg zu der Sensormessachse und/oder Aufnahmeachse verlaufend angeordnet sein. Dies ermöglicht ein nahes Herantasten einer Tastspitze des Testsensors, ohne dass Komponenten des Testsensors mit einem größeren Umfang wie beispielsweise ein Messkopf des Testsensors, beim Erfassen an die Referenzfläche stoßen. Gemäß einer Ausführungsform kann das Referenzmodul zumindest einen weiteren ersten Messpunkt und einen weiteren zweiten Messpunkt aufweisen, wobei der Tastsensor entlang zumindest einer weiteren Sensormessachse verfahrbar ist, um den weiteren ersten Messpunkt und den weiteren zweiten Messpunkt zu erfassen, um eine Ausrichtung der weiteren Sensormessachse gegenüber dem Maschinenkoordinatensystem zu erkennen. Der Tastsensor kann zum Bewegen auf der Sensormessachse und der weiteren Sensormessachse beispielsweise an einem Kreuztisch gekoppelt sein. So ist ferner das Überprüfen der Ausrichtung auch der weiteren Sensormessachse ermöglicht. Die Messpunkte und die weiteren Messpunkte können hierbei beispielsweise auf unterschiedlich ausgerichteten Referenzflächen des Referenzmoduls angeordnet sein.

Das Messsystem weist zum Vermessen des Werkstücks zumindest einen optischen Sensor auf.

Ein Verfahren zum Betreiben eines Messsystems in einer der vorangehend beschriebenen Varianten weist einen Schritt des Einmessens, einen Schritt des Bewegens der Sensoreinrichtung auf Höhe des Werkstücks, einen Schritt des Messens, einen Schritt des Bewegens der Sensoreinrichtung auf Höhe des Referenzmoduls, einen Schritt des Messens und einen Schritt des Justierens auf. Im Schritt des Einmessens wird eine erste Einmessposition des ersten Messpunkts des an dem Fixpunkt des Messsystems befestigten Referenzmoduls unter Verwendung des Tastsensors der Sensoreinrichtung eingemessen und die erste Einmessposition als eine erste Referenzposition bereitgestellt und es wird eine zweite Einmessposition des zweiten Messpunkts des Referenzmoduls unter Verwendung des Tastsensors eingemessen und die zweite Einmessposition als eine zweite Referenzposition bereitgestellt. Im Schritt des Bewegens der Sensoreinrichtung auf Höhe des Werkstücks wird die Sensoreinrichtung auf Höhe des Werkstücks bewegt. Im Schritt des Messens werden Punkte auf der Oberfläche des in dem Maschinenbett aufgenommenen Werkstücks unter Verwendung der Sensoreinrichtung vermessen. Im Schritt des Bewegens der Sensoreinrichtung auf Höhe des Referenzmoduls wird die Sensoreinrichtung auf Höhe des Referenzmoduls bewegt. Im Schritt des Messens werden eine erste aktuelle Position des ersten Messpunkts unter Verwendung des Tastsensors der Sensoreinrichtung und eine zweite aktuelle Position des zweiten Messpunkts gemessen. Im Schritt des Justierens wird die Sensormessachse gegenüber dem Maschinenkoordinatensystem unter Verwendung einer ersten Abweichung der ersten aktuellen Position von der ersten Referenzposition und/oder einer zweiten Abweichung der zweiten aktuellen Position von der zweiten Referenzposition justiert.

Das Verfahren ermöglicht eine ständige Überprüfung und Justierung der Ausrichtung von Sensormessachsen in einem Messsystem zur Vermessung von Werkstücken. Gemäß einer Ausführungsform werden im Schritt des Einmessens einmalig oder in sehr großen zeitlichen Abständen Referenzwerte an dem Referenzmodul bestimmt. Weiterhin werden in dem Schritt der Messung beispielsweise Form-, Lage- und Dimensionsmerkmale an einem im Messsystem aufgenommenen Werkstück gemessen. Um den Schritt der Justierung durchführen zu können werden zunächst in dem weiteren Schritt des Messens Messwerte am Referenzmodul gemessen, die dann im Schritt des Justierens mit den beim Einmessen bestimmten Referenzwerten verglichen werden, woraus Korrekturwerte abgeleitet werden können. Die Justierung sollte möglichst häufig, idealerweise vor jeder Messung, erfolgen, insbesondere bei veränderlichen Umgebungsbedingungen, wenn das Messsystem z.B. nicht in einem Messraum, sondern in einer Werkhalle eingesetzt werden soll.

Der Ansatz wird nachstehend anhand der beigefügten Zeichnungen beispielhaft näher erläutert. Es zeigen:
Fig. 1 eine schematische Frontansicht eines Messsystems gemäß einem Ausführungsbeispiel;
Fig. 2 eine perspektivische Darstellung eines Referenzmoduls und eines Tastsensors eines Messsystems gemäß einem Ausführungsbeispiel;
Fig. 3 eine perspektivische Darstellung eines Referenzmoduls und eines Tastsensors eines Messsystems gemäß einem Ausführungsbeispiel;
Fig. 4 eine schematische Seitenansicht eines Referenzmoduls an einem Messsystem gemäß einem Ausführungsbeispiel; und
Fig. 5 ein Ablaufdiagramm eines Verfahrens zum Betreiben eines Messsystems gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

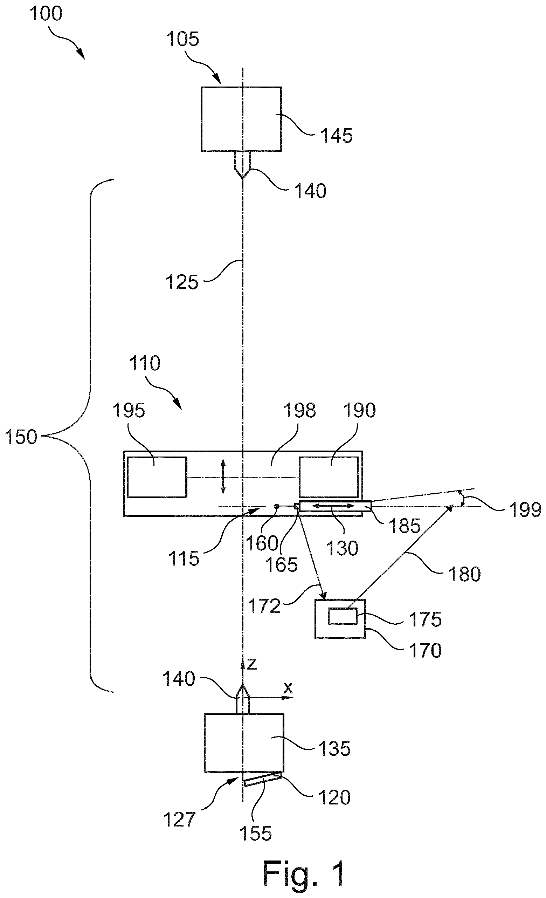

Fig. 1 zeigt eine schematische Frontansicht eines Messsystems 100 gemäß einem Ausführungsbeispiel.

Das Messsystem 100 weist ein Maschinenbett 105, eine Sensoreinrichtung 110 mit einem Tastsensor 115 und ein Referenzmodul 120 auf. Der Tastsensor 115 wird auch als taktiler Messkopf mit einem Tastelement bezeichnet. In dem Maschinenbett 105 ist unter Verwendung geeigneter Einrichtungen ein Werkstück entlang einer Aufnahmeachse 125, hier beispielhaft die z-Achse, aufnehmbar. Die Sensoreinrichtung 110 mit dem Tastsensor 115 kann durch weitgehend gleichberechtigte und z.B. orthogonal angeordnete Sensormessachsen zu jedem Punkt innerhalb des Messraumes des Messsystems 100 und insbesondere zu Punkten auf der Oberfläche des aufgenommenen Werkstücks oder des Referenzmoduls 120 bewegt werden.. Lediglich beispielhaft kann das Messsystem 100 verwendet werden, um eine Kontur des Werkstücks zu erfassen. Das Referenzmodul 120 ist an einem Fixpunkt 127 des Messsystems 100 befestigt oder befestigbar und weist zumindest einen ersten Messpunkt und einen zweiten Messpunkt auf. Der Tastsensor 115 ist entlang zumindest einer Sensormessachse 130, hier beispielhaft die x-Achse, verfahrbar und dazu ausgebildet, um den ersten Messpunkt und den zweiten Messpunkt zu erfassen, um eine Ausrichtung der Sensormessachse 130 gegenüber dem Maschinenkoordinatensystem des Messsystems 100 zu erkennen. Dadurch lässt sich die Ausrichtung einer oder mehrerer Messachsen des Tastsensors 115 gegenüber dem Maschinenkoordinatensystem des Messsystems 100 bestimmen. Gemäß einem Ausführungsbeispiel sind die in Fig. 1 gezeigte x- und z-Achse Teil des Maschinenkoordinatensystems.

Das Maschinenbett 105 weist gemäß diesem Ausführungsbeispiel einen Spindelstock 135 mit einer Zentrierspitze 140 und einen koaxial zu dem Spindelstock 135 angeordneten Reitstock 145 mit einer Zentrierspitze 140 auf. Zwischen den zwei einander zugewandten koaxialen Zentrierspitzen 140 ist beispielsweise ein wellenförmiges Werkstück entlang der Aufnahmeachse 125 aufnehmbar oder einspannbar. Beispielsweise ist das Werkstück zwischen den Zentrierspitzen 140 um die Aufnahmeachse 125 drehbar aufnehmbar. Das Referenzmodul 120 ist gemäß diesem Ausführungsbeispiel an dem Fixpunkt 127 befestigt, der an dem Maschinenbett 105, hier beispielhaft an dem Spindelstock 135 angeordnet ist. Hierbei ist das Referenzmodul 120 gemäß diesem Ausführungsbeispiel unbeweglich an dem Fixpunkt 127 fixiert. Das Referenzmodul 120 ist ferner gemäß diesem Ausführungsbeispiel außerhalb eines Vermessungsbereichs 150, in welchem das Werkstück vermessbar ist, befestigt. Gemäß diesem Ausführungsbeispiel ist das Referenzmodul 120 eine Ebene unter oder gemäß einem alternativen Ausführungsbeispiel eine Ebene über dem Vermessungsbereich 150, dann beispielsweise an dem Reitstock 145, befestigt.

Das hier vorgestellte Messsystem 100 ermöglicht vorteilhafterweise durch Erfassen der Messpunkte auf dem Referenzmodul 120 eine Überprüfung der Ausrichtung der Sensormessachse 130 gegenüber dem Maschinenkoordinatensystem , um Messfehler zu reduzieren oder sogar zu vermeiden.

Gemäß diesem Ausführungsbeispiel ist das Referenzmodul 120 an dem Fixpunkt 127 befestigt, der an einem der Zentrierspitze 140 des Spindelstocks 135 des Maschinenbetts 105 abgewandten Ende des Spindelstocks 135 angeordnet ist. Das Referenzmodul 120 weist gemäß diesem Ausführungsbeispiel ein Hartmetall auf oder ist vollständig aus Hartmetall ausgeformt. Gemäß einem alternativen Ausführungsbeispiel weist das Referenzmodul 120 zusätzlich oder alternativ ein anderes Material auf, das temperaturbeständig und/oder formbeständig bei Temperaturen von beispielsweise mehr als 20°C ist. Das Referenzmodul 120 weist ferner gemäß diesem Ausführungsbeispiel zumindest eine plane Referenzfläche 155 auf, auf der der erste Messpunkt und der zweite Messpunkt angeordnet sind. Die plane Referenzfläche 155 ist gemäß diesem Ausführungsbeispiel schräg zu der Sensormessachse 130 und/oder Aufnahmeachse 125 verlaufend angeordnet. Dies ermöglicht ein nahes Herantasten einer Tastspitze 160 des Testsensors 115, ohne dass Komponenten des Testsensors 115 mit einem größeren Umfang wie beispielsweise ein Messkopf 165 des Testsensors 115, beim Erfassen an die Referenzfläche 155 stoßen. Gemäß einem Ausführungsbeispiel weist das Referenzmodul 120 eine Messspur auf, auf der zumindest der erste Messpunkt und der zweite Messpunkt angeordnet sind. Das Referenzmodul weist gemäß einem Ausführungsbeispiel ferner zumindest einen zusätzlichen Messpunkt oder eine beliebige Anzahl zusätzlicher Messpunkte auf. Der zusätzliche Messpunkt oder die zusätzlichen Messpunkte sind gemäß einem Ausführungsbeispiel auf der Messspur angeordnet.

Gemäß diesem Ausführungsbeispiel ist der Tastsensor 115 ausgebildet, um in einem Einmessverfahren eine erste Einmessposition des ersten Messpunkts einzumessen und als eine erste Referenzposition bereitzustellen und eine zweite Einmessposition des zweiten Messpunkts einzumessen und als eine zweite Referenzposition bereitzustellen.

Gemäß diesem Ausführungsbeispiel ist der Tastsensor 115 ferner ausgebildet, um eine erste aktuelle Position des ersten Messpunkts zu messen und eine zweite aktuelle Position des zweiten Messpunkts zu messen, wobei das Messsystem 100 gemäß diesem Ausführungsbeispiel eine Auswerteeinrichtung 170 aufweist, die ausgebildet ist, um die aktuelle erste Position mit der ersten Referenzposition und die zweite aktuelle Position mit der zweiten Referenzposition zu vergleichen und eine Fehleinstellung der Sensormessachse 130 gegenüber dem Maschinenkoordinatensystem zu erkennen, wenn die erste aktuelle Position von der ersten Referenzposition und/oder die zweite aktuelle Position von der zweiten Referenzposition abweicht und/oder eine korrekte Einstellung der Sensormessachse 130 gegenüber dem Maschinenkoordinatensystem zu erkennen, wenn die erste aktuelle Position der ersten Referenzposition und/oder die zweite aktuelle Position der zweiten Referenzposition entspricht. Die Auswerteeinrichtung 170 ist gemäß einem Ausführungsbeispiel in einem Steuergerät des Messsystems 100 angeordnet und/oder ausgebildet, um Messwerte 172 des Tastsensors 115, die die aktuellen Positionen und/oder Referenzpositionen repräsentieren, von dem Tastsensor 115 zu empfangen.

Das Messsystem 100 weist weiterhin gemäß diesem Ausführungsbeispiel eine Korrektureinrichtung 175 auf, die ausgebildet ist, um unter Verwendung der aktuellen ersten Position und der aktuellen zweiten Position die Sensormessachse 130 oder eine Vermessungsformel zum Vermessen des Werkstücks zu korrigieren, wenn die Fehleinstellung erkannt wird. So wird die Sensormessachse 130 gemäß einem Ausführungsbeispiel durch ein Korrektursignal 180 von der Korrektureinrichtung 175 derart korrigiert, dass sie wieder korrekt zu dem Maschinenkoordinatensystem ausgerichtet ist, um Messfehler bei der Vermessung zu vermeiden. Oder es wird gemäß einem alternativen Ausführungsbeispiel durch das Korrektursignal 180 eine durch die Fehleinstellung bewirkte veränderte Sensormessachse in der Vermessungsformel derart berücksichtigt, dass Messfehler aufgrund der veränderten Sensormessachse ausgeglichen/korrigiert werden.

Der Tastsensor 115 ist gemäß diesem Ausführungsbeispiel mittels eines verschiebbaren Tisches an der Sensoreinrichtung 110 gekoppelt. Gemäß diesem Ausführungsbeispiel ist der Tisch als ein Kreuztisch 185 ausgeformt, der eine Bewegung des Tastsensors 115 entlang einer Mehrzahl von Sensormessachsen ermöglicht.

Gemäß einem Ausführungsbeispiel weist das Referenzmodul 120 zumindest einen weiteren ersten Messpunkt und einen weiteren zweiten Messpunkt auf, wobei der Tastsensor 115 entlang zumindest der orthogonal zu der Aufnahmeachse 125 und orthogonal zu der Sensormessachse 130 ausgerichteten weiteren Sensormessachse verfahrbar ist, um den weiteren ersten Messpunkt und den weiteren zweiten Messpunkt zu messen, um eine Ausrichtung der weiteren Sensormessachse gegenüber der Aufnahmeachse 125 und/oder Sensormessachse 130 zu erkennen. Die Messpunkte und die weiteren Messpunkte sind hierbei gemäß einem Ausführungsbeispiel auf unterschiedlich ausgerichteten Referenzflächen 155 des Referenzmoduls 120 angeordnet.

Die Sensoreinrichtung 110 weist zum Messen der Kontur des Werkstücks gemäß diesem Ausführungsbeispiel zumindest einen optischen Sensor auf. Der optische Sensor umfasst gemäß diesem Ausführungsbeispiel eine Kamera 190 und/oder eine Beleuchtungseinheit 195. Die Sensoreinrichtung 110 ist gemäß diesem Ausführungsbeispiel an einem linear entlang der z-Achse verfahrbaren Messschlitten 198 aufgenommen.

Das hier vorgestellte Messsystem 100 ermöglicht vorteilhafterweise eine Überwachung und Korrektur der Orientierung von messenden Achsen in einem taktilen Messgerät. Technisch möglich ist dies bei jeder messenden Achse, mit der der Tastsensor 115 verbunden ist, also nicht nur den scannenden Achsen. Die Orientierung der Messachsen im Maschinenkoordinatensystem verändert sich durch äußere Einflüsse wie Temperatur was zu Messfehlern führen kann.

Anders als bei beispielsweise einem ebenfalls möglichen punktweisen Abgleich von Positionsoffsets an Kalibrierkugeln können bei dem hier vorgestellten Messsystem 100 vorteilhafterweise Änderungen des Winkels einer Achse 130 erfasst werden. Gemäß einem Ausführungsbeispiel ist ferner eine Nachführung von Korrekturen bei Änderung der Orientierung einer Achse 130 im Maschinenkoordinatensystem durch das Messsystem 100 realisiert.

An dem Fixpunkt 127 des Messsystems 100, das im Folgenden auch als "Maschine", "Messgerät" oder "Messmaschine" bezeichnet wird, ist das Referenzmodul 120 mit gemäß einem Ausführungsbeispiel einer oder mehreren beispielsweise geschliffenen Planflächen in Form der zumindest einen Referenzfläche 155 angebracht, die mit dem Tastsensor 115, auch "Taster" genannt, scannbar ist/sind. Eine Befestigung des Referenzmoduls 120 ist gemäß diesem Ausführungsbeispiel so gestaltet, das sich die Orientierung der Flächen 155 unter den gegebenen Umgebungsbedingungen nicht ändert. Die Referenzflächen 155 sind zur besseren Erreichbarkeit für bestimmte Tastelemente wie die Tastspitze 160 gemäß diesem Ausführungsbeispiel zu den Achsen 130, 125 geneigt. Auf den Referenzflächen 155 ist gemäß einem Ausführungsbeispiel eine Messspur oder mehrere Messpunkte festgelegt, anhand derer die Orientierung der Referenzfläche 155 bestimmbar ist. Beim Einmessen der Maschine wird diese Orientierung als Referenz abgelegt. Da das Referenzmodul 120 selbst im Maschinenkoordinatensystem fixiert ist, ist eine zu einem späteren Zeitpunkt gemessene Änderung der Orientierung bezüglich der Referenz der Achse zuordenbar und diese korrigierbar. Da das Referenzmodul 120 ständig direkt in der Maschine vorhanden ist, ist der Abgleich gemäß einem Ausführungsbeispiel permanent bei jeder Messung/Vermessung durchführbar.

Gemäß einem Ausführungsbeispiel weist das Referenzmodul 120 für jede der messenden Achsen, also für jede der Sensormessachsen 130, eine solche Referenzfläche 155 auf. Anstatt einer Referenzfläche 155 kann das Referenzmodul 120 auch so gestaltet sein, dass mehrere einzelne Punkte reproduzierbar von dem Tastsensor 115 antastbar sind.

Mit dem von dem Messsystem 100 durchführbaren Verfahren ist es möglich, laufend auf Änderungen der Orientierung der Achsen 130 zu reagieren und diese zu korrigieren. Damit ist es vorteilhafterweise möglich, die Messgeräte auch in fertigungsnaher Umgebung ohne stabile Temperaturverhältnisse einzusetzen.

Das Messsystem 100 besteht gemäß einem Ausführungsbeispiel aus den Kernkomponenten Maschinenbett 105 mit dem darauf in z-Richtung linear verfahrbaren Messschlitten 198 mit Kamera 190 und Beleuchtungseinheit 195 sowie dem Spindelstock 135 und dem Reitstock 145. Das zu vermessende, meist wellenförmige Werkstück wird zwischen Reitstock 145 und Spindelstock 135 eingespannt und ist gemäß einem Ausführungsbeispiel durch einen Spindelstock-Antrieb um die Maschinenachse, hier die z-Achse, drehbar. Die aus Messschlitten 198, Kamera 190 und Beleuchtungseinheit 195 bestehende Messeinheit ist linear entlang der z-Achse beweglich und ausgebildet, um ein Schattenbild des eingespannten Werkstücks aufzeichnen. Ferner ist die Messmaschine durch den Tastsensor 115 mit einem taktilen Messkopf 165 erweitert, der mit dem an der Messeinheit angebrachten Kreuztisch 185 zusätzlich in x- und y-Richtung verfahrbar ist, so dass zusammen mit der Messeinheit eine Positionierung des Tastsensors 115 in allen drei Koordinatenrichtungen möglich ist.

Im folgenden werden Vorgänge des Einmessens und der Temperaturkompensation anhand eines Ausführungsbeispiels beschrieben.

Maße an einem zu vermessenden Werkstück, das im Folgenden auch als "Teil" bezeichnet wird, sind üblicherweise in einem auf das Teil bezogenen Koordinatensystem, das sogenannte "Teilekoordinatensystem" angegeben, das z. B. bei wellenförmigen Teilen durch eine Bezugsachse durch zwei Hauptlager, einen Rotationswinkel bezüglich dieser Achse, z. B. ein Nockenwinkel oder der Winkel eines Hublagers bei einer Kurbelwelle, und einen Referenzpunkt auf der Achse, z. B. ein Ende des Teils, definiert wird. Die Messmaschine besitzt ein eigenes Koordinatensystem, das "Maschinenkoordinatensystem". Am Beginn jeder Messung wird der Bezug zwischen Maschinenkoordinatensystem und Teilekoordinatensystem durch die Messung von Referenzgrößen an dem jeweiligen Teil hergestellt.

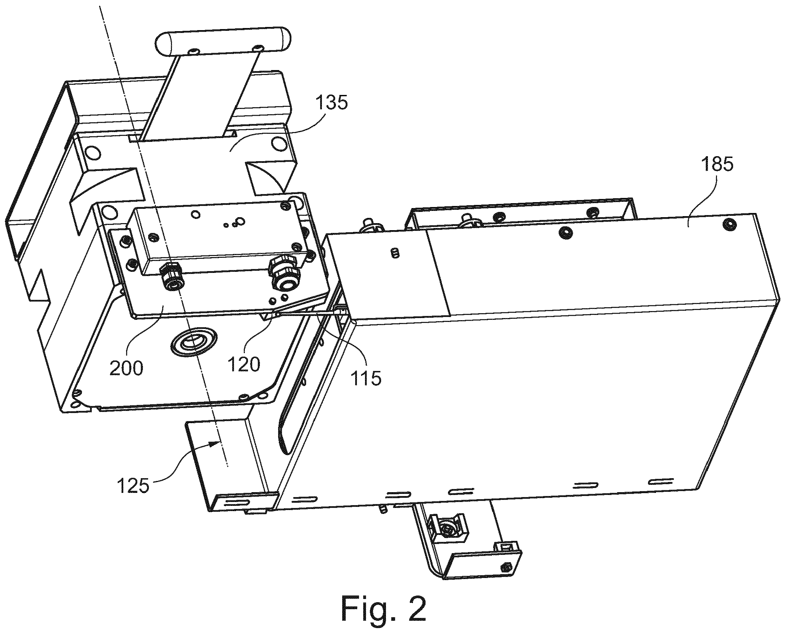

Fig. 2 zeigt eine perspektivische Darstellung eines Referenzmoduls 120 und eines Tastsensors 115 eines Messsystems gemäß einem Ausführungsbeispiel. Dabei kann es sich um das in Fig. 1 beschriebene Messsystem handeln.

Gezeigt sind der Spindelstock 135 mit dem Referenzmodul 120 und der Kreuztisch 185 mit dem taktilen Messkopf des Tastsensors 115 von unten. Das Referenzmodul 120 ist gemäß diesem Ausführungsbeispiel mittels einer Haltevorrichtung 200 an die Unterseite des Spindelstocks 135 gekoppelt, beispielsweise geschraubt.

Das Referenzmodul 120 ist gemäß diesem Ausführungsbeispiel als ein Quader mit geschliffenen Seitenflächen ausgeformt, der mit einem Winkel unterhalb des Spindelstockes 135 angebracht ist. Im Betrieb wird auf einer Unterseite des Referenzmoduls 120 wie skizziert ein Profil aufgezeichnet, also eine Menge von Messpunkten, an die durch Ausgleichsrechnung eine Gerade anpassbar ist. Prinzipiell ist es auch möglich, nur zwei einzelne Messpunkte anzutasten, durch eine größere Anzahl von Messpunkten erhält man jedoch stabilere Ergebnisse.

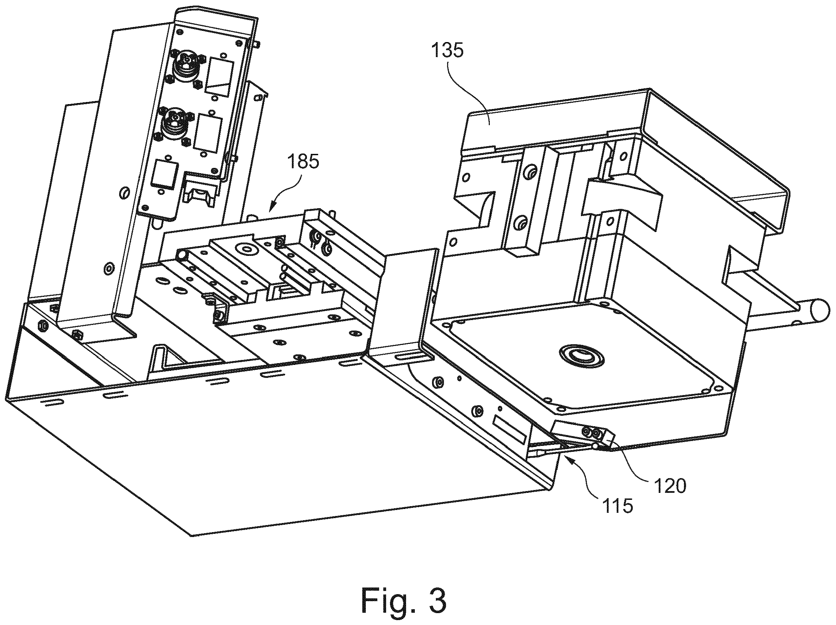

Fig. 3 zeigt eine perspektivische Darstellung eines Referenzmoduls 120 und eines Tastsensors 115 eines Messsystems gemäß einem Ausführungsbeispiel. Dabei kann es sich um das in Fig. 2 beschriebene Referenzmoduls und den in Fig. 2 beschriebene Tastsensor 115 handeln, welche gemäß diesem Ausführungsbeispiel vom Maschinenbett aus gesehen dargestellt sind.

Gemäß diesem Ausführungsbeispiel ist der Spindelstock 135 mit dem unterhalb des Spindelstock 135 befestigten Referenzmodul 120 sowie der Kreuztisch 185 mit dem taktilen Messkopf des Tastsensors 115 vom Maschinenbett aus gesehen dargestellt.

Der Kreuztisch 185 ist soweit nach unten verfahren, dass sich der Tastsensor 115 unterhalb des Spindelstocks 135 befindet. Der Messkopf des Tastsensors 115 ist soweit herausgefahren, dass der Messkopf eine Oberfläche des Referenzmoduls 120 berührt.

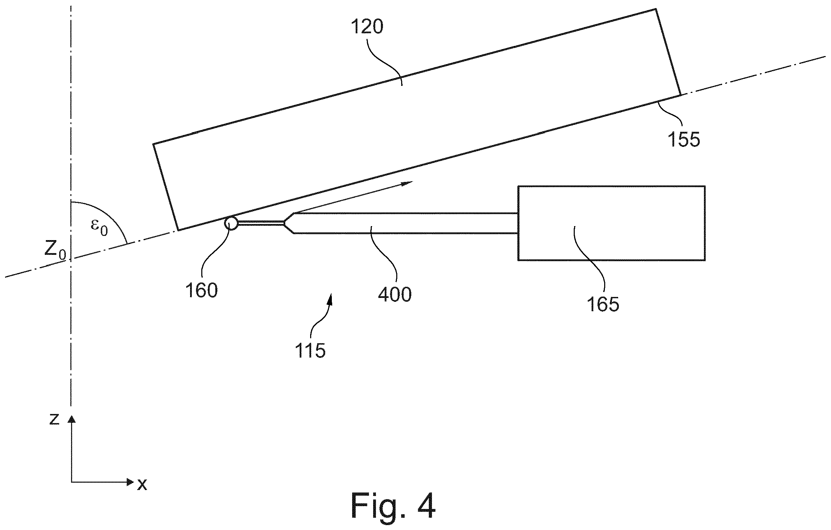

Fig. 4 zeigt eine schematische Seitenansicht eines Referenzmoduls 120 an einem Messsystem gemäß einem Ausführungsbeispiel. Dabei kann es sich um das in einer der vorangegangenen Figuren beschriebene Referenzmodul 120 an dem Messsystem handeln.

Gezeigt ist eine Messwertaufzeichnung am Referenzmodul 120. Da davon auszugehen ist, dass der Winkel *ε*0 zwischen der Referenzfläche 155 und der z-Achse und ein Schnittpunkt z0 mit der Maschinenachse sich während des Betriebes der Messmaschine nicht verändern, ist eine Änderung des gemessenen Wertes auf eine Änderung des Winkels zwischen der x- und z-Achse zurückzuführen und entsprechend rechnerisch kompensierbar. Die Schrägstellung des Referenzmoduls 120 wurde gewählt, um einen möglichst langen Abschnitt mit der Tastspitze 160 erreichen zu können, ohne dass dickere Teile eines Tastarmes 400 zwischen der Tastspitze 160 und dem Messkopf 165 und/oder dickere Teile des Messkopfes 165 die Referenzfläche 155 berühren. Bei entsprechender Geometrie des Tastsensors 115 wäre eine zu der x-Achse achsparallele Anbringung des Referenzmoduls 120 alternativ möglich. Analog sind gemäß einem Ausführungsbeispiel unter Verwendung des Messsystems auch die Winkel zwischen y- und z-Achse und zwischen x- und y-Achse bestimmbar und kompensierbar.

Gemäß einem Ausführungsbeispiel ist ein Abstand des ersten Messpunkts zu der z-Achse größer, als ein Abstand des zweiten Messpunkts.

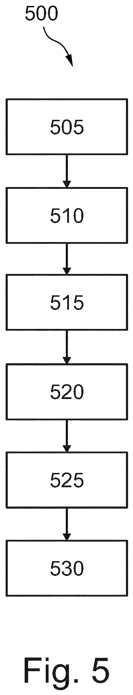

Fig. 5 zeigt ein Ablaufdiagramm eines Verfahrens 500 zum Betreiben eines Messsystems gemäß einem Ausführungsbeispiel. Dabei kann es sich um das in einer der vorangegangenen Figuren beschriebene Messsystem handeln.

Das Verfahren 500 weist einen Schritt 505 des Einmessens, einen Schritt 510 des Bewegens der Sensoreinrichtung auf Höhe des Werkstücks, einen Schritt 515 des Messens, einen Schritt 520 des Bewegens der Sensoreinrichtung auf Höhe des Referenzmoduls, einen Schritt 525 des Messens und einen Schritt 530 des Justierens auf. Der Schritt 505 des Einmessens wird beispielsweise einmalig bei Inbetriebnahme des Messsystems und gegebenenfalls zusätzlich oder alternativ in großen zeitlichen Abständen ausgeführt.

Bei dem Schritt 530 des Justierens, bei dem gemäß einem Ausführungsbeispiel ein Bestimmen von Korrekturen aus Abweichungen von den im Schritt 505 des Einmessens gemessenen Messwerten durchgeführt wird, handelt es sich um einen von dem Schritt 505 verschiedenen Ablauf.

Im Schritt 505 des Einmessens wird eine erste Einmessposition des ersten Messpunkts des an dem Fixpunkt des Messsystems befestigten Referenzmoduls unter Verwendung des Tastsensors der Sensoreinrichtung eingemessen und die erste Einmessposition als eine erste Referenzposition bereitgestellt und es wird eine zweite Einmessposition des zweiten Messpunkts des Referenzmoduls unter Verwendung des Tastsensors eingemessen und die zweite Einmessposition als eine zweite Referenzposition bereitgestellt.

Im Schritt 510 des Bewegens der Sensoreinrichtung auf Höhe des Werkstücks wird die Sensoreinrichtung auf Höhe des Werkstücks bewegt. Im Schritt 515 des Messens wird zumindest ein Punkt auf einer Oberfläche oder eine Kontur des in dem Maschinenbett aufgenommenen Werkstücks unter Verwendung der Sensoreinrichtung vermessen. Der Schritt 515 kann mehrfach wiederholt ausgeführt werden. So können auch unterschiedliche Werkstücke vermessen werden, ohne dass der Schritt 505 des Einmessens erneut durchgeführt werden muss.

Um die Messeinrichtung neu zu justieren oder eine bestehende Justierung zu überprüfen können die Schritte 520, 530 durchgeführt werden. Dazu wird im Schritt 520 die Sensoreinrichtung auf Höhe des Referenzmoduls bewegt. Im Schritt 525 des Messens werden eine erste aktuelle Position des ersten Messpunkts unter Verwendung des Tastsensors der Sensoreinrichtung und eine zweite aktuelle Position des zweiten Messpunkts gemessen. Im Schritt 530 des Justierens wird die Sensormessachse gegenüber dem Maschinenkoordinatensystem unter Verwendung einer ersten Abweichung der ersten aktuellen Position von der ersten Referenzposition und/oder einer zweiten Abweichung der zweiten aktuellen Position von der zweiten Referenzposition justiert. Im Schritt 530 des Justierens wird gemäß einem Ausführungsbeispiel zunächst eine Fehleinstellung der Sensormessachse gegenüber dem Maschinenkoordinatensystem unter Verwendung der ersten Abweichung und/oder der zweiten Abweichung erkannt und anschließend zur Justierung verwendet.

Die Schritte 520, 530 können mehrfach wiederholt ausgeführt werden, wobei jeweils auf Referenzpositionen zurückgegriffen werden kann, die im zuletzt ausgeführten Schritt 505 des Einmessens eingemessen wurden. Beispielsweise können zwischen zwei aufeinanderfolgenden Schritt 520 mehrere Schritte 515 ausgeführt werden. Beispielsweise können auf diese Weise auch unterschiedliche Werkstücke nacheinander vermessen werden, bevor eine Justierung des Messsystems durchgeführt wird.

Die Schritte 520 des Bewegens der Sensoreinrichtung auf Höhe des Referenzmoduls und 525 des Erfassens werden gemäß einem Ausführungsbeispiel nacheinander entweder direkt nach jedem Schritt 515 des Messens oder vor jedem Schritt 510 des Bewegens der Sensoreinrichtung auf Höhe des Werkstücks ausgeführt.

Der Schritt 505 des Einmessens wird gemäß einem Ausführungsbeispiel einmalig oder in einem definierten zeitlichen Intervall ausgeführt.

## Patentansprüche

1. Messsystem (100) mit einem Maschinenbett (105), in dem ein Werkstück entlang einer Aufnahmeachse (125) aufnehmbar ist, und mit einer in mehreren Richtungen relativ zu dem Maschinenbett (105) verfahrbaren Sensoreinrichtung (110) mit einem Tastsensor (115) zur Erfassung von Punkten in einem Maschinenkoordinatensystem des Messsystems (100) und mit zumindest einem optischen Sensor (190, 195) zum Vermessen der Kontur des Werkstücks, wobei das Messsystem (100) die folgenden Merkmale aufweist:
ein an einem Fixpunkt (127) des Maschinenbetts (105) des Messsystems (100) unbeweglich befestigtes Referenzmodul (120) mit zumindest einem ersten Messpunkt und einem zweiten Messpunkt,
den Tastsensor (115), der entlang zumindest einer Sensormessachse (130) verfahrbar ist und dazu ausgebildet ist, den ersten Messpunkt und den zweiten Messpunkt zu erfassen, um eine Ausrichtung der Sensormessachse (130) gegenüber dem Maschinenkoordinatensystem zu erkennen, um eine Änderung eines Winkels der Sensormessachse (130) gegenüber dem Maschinenkoordinatensystem zu erkennen,
wobei das Messsystem (100) ausgebildet ist, um unter Verwendung des Tastsensors (115) in einem Einmessverfahren eine erste Einmessposition des ersten Messpunkts einzumessen und als eine erste Referenzposition bereitzustellen und eine zweite Einmessposition des zweiten Messpunkts einzumessen und als eine zweite Referenzposition bereitzustellen,
wobei der Tastsensor (115) ausgebildet ist, um eine erste aktuelle Position des ersten Messpunkts zu messen und eine zweite aktuelle Position des zweiten Messpunkts zu messen, wobei das Messsystem (100) eine Auswerteeinrichtung (170) aufweist, die ausgebildet ist, um die aktuelle erste Position mit der ersten Referenzposition und die zweite aktuelle Position mit der zweiten Referenzposition zu vergleichen und eine Fehleinstellung der Sensormessachse (130) gegenüber dem Maschinenkoordinatensystem zu erkennen, wenn die erste aktuelle Position von der ersten Referenzposition und/oder die zweite aktuelle Position von der zweiten Referenzposition abweicht und/oder eine korrekte Einstellung der Sensormessachse (130) gegenüber dem Maschinenkoordinatensystem zu erkennen, wenn die erste aktuelle Position der ersten Referenzposition und/oder die zweite aktuelle Position der zweiten Referenzposition entspricht, und
eine Korrektureinrichtung (175), die ausgebildet ist, um unter Verwendung der aktuellen ersten Position und der aktuellen zweiten Position die Sensormessachse (130) oder eine Vermessungsformel zum Vermessen des Werkstücks zu korrigieren, wenn die Fehleinstellung erkannt wird.

2. Messsystem (100) gemäß Anspruch 1, bei dem das Referenzmodul (120) an dem Fixpunkt (127) befestigt oder befestigbar ist, der an einem einer Zentrierspitze (140) eines Spindelstocks (135) des Maschinenbetts (105) abgewandten Ende des Spindelstocks (135) angeordnet ist.

3. Messsystem (100) gemäß einem der vorangegangenen Ansprüche, bei dem das Referenzmodul (120) ein Hartmetall aufweist.

4. Messsystem (100) gemäß einem der vorangegangenen Ansprüche, bei dem das Referenzmodul (120) zumindest eine plane Referenzfläche (155) aufweist, auf der der erste Messpunkt und der zweite Messpunkt angeordnet sind.

5. Messsystem (100) gemäß einem der vorangegangenen Ansprüche, bei dem das Referenzmodul (120) eine Messspur aufweist, auf der zumindest der erste Messpunkt und der zweite Messpunkt angeordnet sind.

6. Messsystem (100) gemäß einem der Ansprüche 4 bis 5, bei der die plane Referenzfläche (155) schräg zu der Sensormessachse (130) und/oder der Aufnahmeachse (125) verlaufend angeordnet sind.

7. Messsystem (100) gemäß einem der vorangegangenen Ansprüche, bei der das Referenzmodul (120) zumindest einen weiteren ersten Messpunkt und einen weiteren zweiten Messpunkt aufweist, wobei der Tastsensor (115) entlang zumindest einer weiteren Sensormessachse verfahrbar ist, um den weiteren ersten Messpunkt und den weiteren zweiten Messpunkt zu erfassen, um eine Ausrichtung der weiteren Sensormessachse gegenüber dem Maschinenkoordinatensystem zu erkennen.

8. Verfahren (500) zum Betreiben eines Messsystems (100) gemäß einem der vorangegangenen Ansprüche, wobei das Verfahren (500) die folgenden Schritte aufweist:
Einmessen (505) einer ersten Einmessposition des ersten Messpunkts des an dem Fixpunkt (127) des Messsystems (100) befestigten Referenzmoduls (120) unter Verwendung des Tastsensors (115) der Sensoreinrichtung (110) und Bereitstellen der ersten Einmessposition als eine erste Referenzposition und Einmessen einer zweiten Einmessposition des zweiten Messpunkts des Referenzmoduls (120) unter Verwendung des Tastsensors (115) und Bereitstellen der zweiten Einmessposition als eine zweite Referenzposition;
Bewegen (510) der Sensoreinrichtung (110) auf Höhe des Werkstücks;
Messen (515) zumindest eines Punkts auf einer Oberfläche des in dem Maschinenbett (105) aufgenommenen Werkstücks unter Verwendung der Sensoreinrichtung (110);
Bewegen (520) der Sensoreinrichtung (110) auf Höhe des Referenzmoduls (120);
Messen (525) einer ersten aktuellen Position des ersten Messpunkts unter Verwendung des Tastsensors (115) der Sensoreinrichtung (110) und einer zweiten aktuellen Position des zweiten Messpunkts; und
Justieren (530) der Sensormessachse (130) gegenüber dem Maschinenkoordinatensystem (125) unter Verwendung einer ersten Abweichung der ersten aktuellen Position von der ersten Referenzposition und/oder einer zweiten Abweichung der zweiten aktuellen Position von der zweiten Referenzposition.

## Claims

1. Measuring system (100) with a machine bed (105), in which a workpiece can be received along a receiving axis (125), and a sensor device (110), which can be moved in a number of directions in relation to the machine bed (105) and has a touch sensor (115) for sensing points in a machine coordinate system of the measuring system (100) and has at least one optical sensor (190, 195) for measuring the contour of the workpiece, wherein the measuring system (100) has the following features:
a reference module (120), which is fastened at a fixed point (127) of the machine bed (105) of the measuring system (100) and has at least a first measuring point and a second measuring point,
the touch sensor (115), which can be moved along at least one sensor measuring axis (130) and is designed to sense the first measuring point and the second measuring point in order to detect an alignment of the sensor measuring axis (130) with respect to the machine coordinate system in order to detect a change in an angle of the sensor measuring axis (130) with respect to the machine coordinate system,
wherein the measuring system (100) is designed to calibrate a first calibrating position of the first measuring point and provide a first reference position and to calibrating a second calibrating position of the second measuring point and provide a second reference position by using the touch sensor (115) in a calibration process,
wherein the touch sensor (115) is designed to measure a first current position of the first measuring point and to measure a second current position of the second measuring point, the measuring system (100) having an evaluation device (170), which is designed to compare the current first position with the first reference position and the second current position with the second reference position and to detect an incorrect setting of the sensor measuring axis (130) with respect to the machine coordinate system if the first current position deviates from the first reference position and/or the second current position deviates from the second reference position and/or to detect a correct setting of the sensor measuring axis (130) with respect to the machine coordinate system if the first current position corresponds to the first reference position and/or the second current position corresponds to the second reference position, and
a correction device (175), which is designed to correct the sensor measuring axis (130) or a measuring formula for measuring the workpiece by using the current first position and the current second position if the incorrect setting is detected.

2. Measuring system (100) according to Claim 1, in which the reference module (120) is fastened or can be fastened at the fixed point (127), which is arranged at the end of a headstock (135) of the machine bed (105) remote from a centring point (140) of the headstock (135).

3. Measuring system (100) according to one of the preceding claims, in which the reference module (120) comprises a hard metal.

4. Measuring system (100) according to one of the preceding claims, in which the reference module (120) has at least one planar reference surface (155), on which the first measuring point and the second measuring point are arranged.

5. Measuring system (100) according to one of the preceding claims, in which the reference module (120) has a measuring track, on which the first measuring point and the second measuring point are arranged.

6. Measuring system (100) according to either of Claims 4 and 5, in which the planar reference surface (155) is arranged running obliquely in relation to the sensor measuring axis (130) and/or the receiving axis (125) .

7. Measuring system (100) according to one of the preceding claims, in which the reference module (120) has at least one further first measuring point and one further second measuring point, wherein the touch sensor (115) can be moved along at least one further sensor measuring axis in order to sense the further first measuring point and the further second measuring point in order to detect an alignment of the further sensor measuring axis with respect to the machine coordinate system.

8. Method (500) for operating a measuring system (100) according to one of the preceding claims, wherein the method (500) has the following steps:
calibrating (505) a first calibrating position of the first measuring point of the reference module (120) fastened at the fixed point (127) of the measuring system (100) by using the touch sensor (115) of the sensor device (110) and providing the first calibrating position as a first reference position and calibrating a second calibrating position of the second measuring point of the reference module (120) by using the touch sensor (115) and providing the second calibrating position as a second reference position;
moving (510) the sensor device (110) to level with the workpiece;
measuring (515) at least one point on a surface of the workpiece received in the machine bed (105) by using the sensor device (110);
moving (520) the sensor device (110) to level with the reference module (120);
measuring (525) a first current position of the first measuring point by using the touch sensor (115) of the sensor device (110) and a second current position of the second measuring point; and
adjusting (530) the sensor measuring axis (130) with respect to the machine coordinate system (125) by using a first deviation of the first current position from the first reference position and/or a second deviation of the second current position from the second reference position.

## Revendications

1. Système de mesure (100) comprenant un bâti de machine (105) dans lequel une pièce peut être reçue le long d'un axe de réception (125), et un dispositif capteur (110) qui peut être déplacé dans plusieurs directions par rapport au bâti de machine (105) et qui comporte un capteur tactile (115) destiné à détecter des points dans un système de coordonnées machine du système de mesure (100) et au moins un capteur optique (190, 195) destiné à mesurer le contour de la pièce, le système de mesure (100) présentant les éléments caractéristiques suivants :
un module de référence (120) fixé à un point fixe (127) du bâti de la machine (105) du système de mesure (100) et comportant au moins un premier point de mesure et un deuxième point de mesure,
le capteur tactile (115) qui est mobile le long d'au moins un axe de mesure de capteur (130) et qui est conçu pour détecter le premier point de mesure et le deuxième point de mesure afin d'orienter l'axe de mesure de capteur (130) par rapport au système de coordonnées de machine pour détecter une variation d'un angle de l'axe de mesure de capteur (130) par rapport au système de coordonnées de machine,
le système de mesure (100) étant conçu pour déterminer une première position d'étalonnage du premier point de mesure et la fournir comme première position de référence et déterminer une deuxième position d'étalonnage du deuxième point de mesure et la fournir comme deuxième position de référence, dans un procédé d'étalonnage à l'aide du capteur tactile (115),
le capteur tactile (115) étant conçu pour mesurer une première position actuelle du premier point de mesure et mesurer une deuxième position actuelle du deuxième point de mesure, le système de mesure (100) comportant un dispositif d'évaluation (170) qui est conçu pour comparer la première position actuelle à la première position de référence et la deuxième position actuelle à la deuxième position de référence et détecter un déréglage de l'axe de mesure de capteur (130) par rapport au système de coordonnées de machine si la première position actuelle diffère de la première position de référence et/ou la deuxième position actuelle diffère de la deuxième position de référence et/ou pour détecter un réglage correct de l'axe de mesure de capteur (130) par rapport au système de coordonnées de machine si la première position actuelle correspond à la première position de référence et/ou la deuxième position actuelle correspond à la deuxième position de référence, et
un dispositif de correction (175) qui est conçu pour corriger l'axe de mesure de capteur (130) ou une formule de mesure destinée à mesurer la pièce à l'aide de la première position actuelle et de la deuxième position actuelle si un déréglage est détecté.

2. Système de mesure (100) selon la revendication 1, dans lequel le module de référence (120) est fixé ou peut être fixé au point fixe (127) qui est situé à une extrémité de poupée (135) qui est opposée à une pointe de centrage (140) d'une poupée (135) du bâti de machine (105) .

3. Système de mesure (100) selon l'une des revendications précédentes, dans lequel le module de référence (120) est un métal dur.

4. Système de mesure (100) selon l'une des revendications précédentes, dans lequel le module de référence (120) comporte au moins une surface de référence plane (155) sur laquelle sont situés le premier point de mesure et le deuxième point de mesure.

5. Système de mesure (100) selon l'une des revendications précédentes, dans lequel le module de référence (120) comporte une piste de mesure sur laquelle sont situés au moins le premier point de mesure et le deuxième point de mesure.

6. Système de mesure (100) selon l'une des revendications 4 à 5, dans lequel la surface de référence plane (155) est disposée de manière à s'étendre obliquement par rapport à l'axe de mesure de capteur (130) et/ou à l'axe de réception (125).

7. Système de mesure (100) selon l'une des revendications précédentes, dans lequel le module de référence (120) comporte au moins un autre premier point de mesure et un autre deuxième point de mesure, le capteur tactile (115) pouvant être déplacé le long d'au moins un autre axe de mesure de capteur pour détecter l'autre premier point de mesure et l'autre deuxième point de mesure afin de détecter l'orientation de l'autre axe de mesure de capteur par rapport au système de coordonnées de machine.

8. Procédé (500) de fonctionnement d'un système de mesure (100) selon l'une des revendications précédentes, le procédé (500) comportant les étapes suivantes :
déterminer (505) une première position d'étalonnage du premier point de mesure du module de référence (120), fixé au point fixe (127) du système de mesure (100), à l'aide du capteur tactile (115) du dispositif capteur (110) et fournir la première position d'étalonnage comme première position de référence et déterminer une deuxième position d'étalonnage du deuxième point de mesure du module de référence (120) à l'aide du capteur tactile (115) et fournir la deuxième position d'étalonnage comme deuxième position de référence ;
déplacer (510) le dispositif capteur (110) au niveau de la pièce ;
mesurer (515) au moins un point sur une surface de la pièce reçue dans le bâti de machine (105) à l'aide du dispositif capteur (110) ;
déplacer (520) le dispositif capteur (110) au niveau du module de référence (120) ;
mesurer (525) une première position actuelle du premier point de mesure à l'aide du capteur tactile (115) du dispositif capteur (110) et une deuxième position actuelle du deuxième point de mesure ; et
ajuster (530) l'axe de mesure de capteur (130) par rapport au système de coordonnées de machine (125) à l'aide d'un premier écart entre la première position actuelle et la première position de référence et/ou un d'un deuxième écart entre la deuxième position actuelle et la deuxième position de référence.
